# EUROPEAN PATENT APPLICATION

(11) **EP 2 372 414 A1**
(43) Date of publication of application: **05.10.2011**
(21) Application number: 10156232.0
(22) Date of filing: 11.03.2010
(51) Int. Cl.: G02B 6/00, G02B 6/28, F21V 5/04

(54) **Multiple side-light guides having a single light source**

(71) Applicant: 3M Innovative Properties Company, Saint Paul, MN 55133-3427 (US)
(72) Inventor: Vogt, Hans-Michael, D-41453, Neuss (DE); Weiskopf, Wolfram, D-41453, Neuss (DE); Cura, Elisabeth, D-41453, Neuss (DE); Pilhofer, Mark, D-41453, Neuss (DE)
(74) Representative: Voortmans, Gilbert J.L.

(57) **Abstract**

A lighting device is provided that includes a light source and a plurality of polymeric side-light guides. Each of the polymeric side -light guides has sides, a first end, a second end, and a side contact edge. Each end has a surface that defines a cross-sectional area. The ends of the plurality of polymeric side -light guides fit together substantially without gaps between the polymeric side-light guides to form a first surface. The total cross-sectional area of the first surface of the plurality of polymeric side-light guides is substantially equal to or less than the cross-sectional area of any of the surfaces of the second end of any one of the polymeric side-light guides. The light source is configured to inject light into the plurality of polymeric side-light guides through the first surface. A kit and method for assembling the kit are also included.

## Description

### Field

This disclosure relates to multiple polymeric lighting devices that can have one source and can emit light along their length.

### Background

Light guides are increasingly being used for decorative and functional lighting purposes in various locations, some of which require the light guide to emit light selectively (e.g., comparatively uniformly or in a particular direction) along its length. Such light guides are referred to hereinafter as side-light guides. Various mechanisms are known for enabling light that is injected into a light guide from a light source at one end to be extracted selectively from the guide along its length to provide, effectively, a linear lighting device. It is recognize d that the use of side-light guides in linear lighting devices offers certain advantages: these include, for example, the possibility of using a low voltage light source such as an LED light source, and of separating the light source from the area in which the lighting device is actually located.

One form of side-light guide has light-extraction elements spaced along its length to cause light that is being propagated along the guide from at least one end thereof to be emitted selectively through a light-emitting region in the wall of the guide. In that case, the light-extraction elements comprise notches in the light guide, each notch having at least one reflecting surface of optical quality i.e., a surface that diffusely scatters only a small amount (generally less than 50%, and in some embodiments even less than 10%) of the light incident upon it. Other light guides are known that have two sets of notches centered along different longitudinal axes in order to control the lateral distribution of light emit ted by the guide. Generally, these types of side-light guides offer the advantage that they can be designed to emit light very efficiently along their length and in a preferred direction with a pre-selected distribution, making them suitable for use in li ghting devices in a wide number of applications. Other forms of side-light guides can include a core surrounded by cladding, in which the inner surface of the cladding is formed with indentations that cause light to be extracted from the light guide. A light-reflecting member may be provided around a portion of the light guide to redirect some of the extracted light in a particular direction.

Side-light guides are available in both flexible and rigid forms, and in materials that will not break or shatter and have a comparatively long useful life. They are also capable of providing a high level of illumination in an energy-efficient manner. Lighting devices incorporating side-light guides have already been used in various locations. They can, for example, be used as cost effective, safe, versatile alternatives to fluorescent tubes in commercial, architectural, and consumer lighting applications but can also be used in situations in which fluorescent tubes are impractical and/or to achieve effects that cann ot be obtained using conventional lighting devices. For example, there is increasing interest in the use of side-light guides in lighting devices in vehicles and it has already been proposed to use such devices on the outside of a vehicle, to outline feat ures such as the rear window or the trunk. More recently, manufacturers have become interested in using side-light guides in lighting devices in car interiors for both practical and aesthetic reasons. Polymeric lighting devices that have side-light guides are well known and are described, for example, in PCT Pat. Publ. Nos. WO 00/25159 (Kengo et al.), and WO 01/51851 (Lundin) as well in PCT App. No. US2009/050447, filed July 14, 2009.

### Summary

Automobile lighting is a cost -driven business. Typically, a flexible light guide, such as guides that are used in automobile lighting can be illuminated by injection of light from one or two light sources such as, for example, light-emitting diodes (LEDs). However, a cost reduction can be realized if more than on e light guide can be illuminated by one light source. The light guides can be polymeric. One of the problems associated with illuminating two or more light guides, such as side-light guides, is light loss and uneven distribution of light along the length of the light guide. One solution to this problem is to move the light source so that it injects light into both light guides and to make the light guides fit together in a manner so that the light guides are mechanically held together by pressure so that the light guides fit together substantially without gaps between them. In this embodiment, a mechanical connector such as, for example, one which can be a standard connector used already for single light guides can be used. In another embodiment, an optical adhesive can be used to bond the light guides together at one end. The optical adhesive, after it is hardened, can comprise the same material as the light guides.

In one aspect, a lighting device is provided that includes a plurality of polymeric side-light guides each having sides, a first end, and a second end, and a side contact edge, wherein each end has a surface that defines a cross-sectional area, wherein the first ends of the plurality of polymeric side-light guides come together to form a first surface, wherein the total cross-sectional area of the first surface of the plurality of polymeric side-light guides is substantially equal to or less than the cross-sectional area of any of the surfaces of the second end of any one of the polymerics ide-light guides.

The provided device can have polymeric side-light guides that have side contact edges. The side contact edges can be in physical and optical contact with one another. The contact edges can fit together substantially without a gap. The lighting device can further include a mechanical connect or that can hold the ends of the polymeric side-light guides together. Alternatively, an optical adhesive can be provided on the contact edges of the polymeric side-light guides to hold them in physical and optical contact with one another. Also provided is a kit for assembling a provided lighting device. The lighting device and the kit can further include a light source, wherein the light source is configured to inject light into the plurality of polymeric side-light guides through the first surface. The light source can be a light-emitting diode.

In another aspect, a method of assembling a lighting device is provided that includes a mechanical connector comprising an elongate opening, and a plurality of polymeric side-light guides each having sides, a first end, and a second end, each end having a surface that defines a cross-sectional area; assembling the first ends of the plurality of polymeric side-light guides so that they fit together to form a first surface; and inserting the first ends of the plurality of polymeric side-light guides into the elongate opening of the mechanical connector, wherein the total cross-sectional area of the first surface of the plurality of polymeric side-light guides is substantially equal to or less than the cross -sectional area of any of the surfaces of any one of the polymeric side -light guides.

The method can further include a light source wherein the light source is configured to inject light into the plurality of polymeric light guides through the first surface. The light source can be a light-emitting diode.

The following is a summary of embodiments according to the invention:
1. A lighting device comprising:
   a plurality of polymeric side-light guides each having sides, a first end, and a second end, and a side contact edge,
   wherein each end has a surface that defines a cross-sectional area,
   wherein the first ends of the plurality of polymeric side-light guides come together to form a first surface,
   wherein the total cross-sectional area of the first surface of the plurality of polymeric side-light guides is substantially equal to or less than the cross-sectional area of any of the surfaces of the second end of any one of the polymeric side-light guides.
2. A lighting device according to embodiment 1, wherein the first ends of the plurality of side-light guides fit together substantially without gaps between the polymeric side-light guides.
3. A lighting device according to embodiment 2, wherein the side contact edges of at least two of the plurality of polymeric side-light guides are in optical contact with one another.
4. A lighting device according to embodiment 3, wherein the contact edges of at least two of the plurality of polymeric side-light guides are in contact with an optical adhesive.
5. A lighting device according to embodiment 4, wherein at least two of the plurality of polymeric side-light guides and the optical adhesive all comprise the same polymer.
6. A lighting device according to any of embodiments 1 to 5, further comprising a mechanical connector that holds the ends of the polymeric side-light guides together.
7. A lighting device according to any of the previous embodiments, wherein at least one of the plurality of polymeric side-light guides comprises light extracting elements on the side of the polymeric side-light guide.
8. A lighting device according to embodiment 7, wherein the light extracting elements comprise notches.
9. A lighting device according to embodiment 1, further comprising a mechanical connector comprising an elongate opening,
   wherein there is physical engagement between the mechanical connector and the surface formed by the ends of the plurality of polymeric side-light guides.
10. A lighting device according to embodiment 9, wherein the contact edges of the first ends of at least two of the polymeric side-light guides are in physical and optical contact with each other.
11. A lighting device according to embodiment 9 or 10, wherein the elongate opening of the mechanical connector and the first ends of the plurality of polymeric side-light guides comprise at least one location feature.
12. A lighting device according to embodiment 11, wherein at least one location feature on the first ends of the plurality of polymeric side-light guides is engaged in the location feature in the elongate opening of the mechanical connector.
13. A lighting device according to any of the embodiments 9 to 12, wherein the plurality of first ends of each polymeric side-light guide and the elongate opening of the mechanical connector comprise an optically clear adhesive.
14. A lighting device according to embodiment 13, wherein the optically clear adhesive comprises the same material as at least one of the polymeric side-light guides.
15. A lighting device according to any of embodiments 1 to 14, further comprising a light source, wherein the light source is configured to inject light into the plurality of polymeric side-light guides through the first surface.
16. A lighting device according to embodiment 15, wherein the light source comprises a light-emitting diode.
17. A vehicle comprising a lighting device according to any of the above embodiments.
18. A kit for assembling a lighting device according to embodiment 6, the kit comprising the plurality of polymeric side-light guides, the mechanical connector, and optionally, an optically clear adhesive, wherein the first end of the plurality of polymeric side-light guides can be inserted into the mechanical connector through the elongate opening to form the lighting device.
19. A kit according to embodiment 18, wherein at least one of the plurality of polymeric side-light guides comprises light extracting elements on the side of the polymeric side-light guide.
20. A kit according to embodiments 18 or 19, further comprising a light source.
21. A method of assembling a lighting device comprising:
   a mechanical connector comprising an elongate opening, and a plurality of polymeric side-light guides each having sides, a first end, and a se cond end, each end having a surface that defines a cross-sectional area;
   assembling the first ends of the plurality of polymeric side-light guides so that they fit together to form a first surface; and
   inserting the first ends of the plurality of polymeric side-light guides into the elongate opening of the mechanical connector,
   wherein the total cross-sectional area of the first surface of the plurality of polymeric side-light guides is substantially equal to or less than the cross-sectional area of any of the surfaces of any one of the polymeric side -light guides.
22. A method of assembling a lighting device according to embodiment 21, wherein the polymeric light guides fit together substantially without gaps between the polymeric side-light guides
23. A method of assembling a lighting device according to embodiment 21, wherein assembling further comprises applying an optically clear adhesive to the first surface of the plurality of polymeric side-light guides.
24. A method of assembling a lighting devi ce according to embodiment 23, wherein the optically clear adhesive is made of the same material as at least one of the polymeric side-light guides.
25. A method of assembling a lighting device according to any of embodiments 21 to 24, further comprising a light source, wherein the light source is configured to inject light into the plurality of polymeric side-light guides through the first surface.
26. A method of assembling a lighting device according to embodiment 25, wherein the light source is a light emitting diode.

In this disclosure:
"contact edge" refers to a surface along the side of a polymeric side-light guide that makes optical contact with similar surface of an adjacent polymeric side-light guide.
"end" of a light guide refers to the terminal surface of the light guide and extends from that surface along the length of the light guide to the end of a contact edge.
"hardened" refers either to a curing process by which a liquid composition, that includes for example a monomer, polymer pre cursors, or mixtures, thereof, is solidified or to a process that allows a fluid heated thermoplastic material to cool and solidify;
"light extractor" refers to an element on the surface of a light guide placed there by design to direct or extract light out of the light guide;
"light guide" refers to an article that receives light at an one end and propagates the light to the other end or to a light extractor without significant loss;
"optical contact" refers to the proximity of at least two polymeric side-light guides along at least one contact edge so that they may transfer light energy from one light guide to the other.
"polyurethane" refers to a polymer that is a reaction product of a multifunctional isocyanate and a polyol and may contain other com ponents;

The provided lighting devices, kits, and methods for assembling embodiments of the lighting devices can allow for the lighting of a plurality of polymeric side-light guides with one source. The provided lighting devices can provide less light loss and more even distribution of light along the length of the light guide than conventional lighting devices. The provided polymeric side-light guides fit together in a manner so that the light guides can mechanically held together by pressure so that the light guides fit together substantially without gaps between them. In some embodiments, a mechanical connector can be used. In other embodiments, an optical adhesive can be used to bond the light guides together at one end. The optical adhesive, after it is hardened, can comprise the same material as the light guides. This can provide an efficient, cost-effective way to distribute light from one light source to its intended destination which can be, for example, in lighting automobile parts such as displays, interior lighting, exterior lighting, etc.

The above summary is not intended to describe each disclosed embodiment of every implementation of the present invention. The brief description of the drawings and the detailed description which follows more particularly exemplify illustrative embodiments.

### Brief Description of the Drawings

Figs. 1a-1d displays transverse cross-sections of polymeric side-light guides or side-light elements useful in the provided devices, kits, and methods.
Fig. 2 is a schematic drawing of the joining of two polymeric side-light guides with a mechanical connector.
Fig. 3 is a photograph of a provided side-lighting device.
Figs. 4a and 4b are drawings of provided side-lighting devices with and without a gap between the polymeric side-light guides respectively.
Fig. 5 is a schematic drawing of an embodiment of two joined polymeric side-light guides useful in the provided devices, kits, and methods.

### Detailed Description

In the following description, reference is made to the accompanying set of drawings that form a part of the description hereof and in which are shown by way of illustration several specific embodiments. It is to be understood that other embodiments are contemplated and may be made without departing from the scope or spirit of the present invention. The following detailed description, therefore, is not to be taken in a limiting sense.

Unless otherwise indicated, all numbers expressing feature sizes, amounts, and physical properties used in the specificati on and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

The provided lighting devices include one light source that is used to inject light into two or more polymeric side-light guides. The provided lighting devices can be useful for providing a high level of illumination in an energy-efficient manner. The provided lighting devices can incorporate side-light guides and can be used in various applications as cost effective, safe, versatile alternatives to fluorescent bulbs in commercial, architectural, and consumer lighting applications. The polymeric lighting devices can be flexible or rigid.

The provided lighting devices include a light source. The light source can be any radiation-emitting device that can operate at least partially in the visible or infrared region of the electromagnetic spectrum. Typically, the light source can emit visible light (such as light between 350 nm to 750 nm in wavelength) or it can emit in the near infrared region of the spectrum (between 750 nm to 2000 nm) in wavelength. Common light sources include light-emitting diodes (LEDs) well known to those of ordinary skill in the art. In some embodiments, LEDs can emit in the visible region of the electromagnetic spectrum (from 500 to 750 nm). In other embodiments, LEDs can emit in the near infrared spectrum such as, for example, in the 900-1000 nm range. LEDs can provide illumination in the visible region of the electromagnetic spectrum, for example, when used to illuminate control panels or outside lighting elements on vehicles. Visible-emitting LEDs can also provide light for conspicuity or for displays. Side-light guides of many different types can be used to transport the light from the light source to other use destinations that are distant from the light source.

The polymeric lighting devices can be made by joining two or more side-light guides. The side-light guides can be made of the same polymeric material. The side-light guides or side-light elements (one and the same) can have substantially the same cross-sectional areas, substantially the same cross-sectional shapes, or both. Alternatively, the side-light guides may have different cross-sectional areas and/or shapes. The cross-sectional shape can be substantially circular or can have any other shape known in the art of side-light guides. For example, European Patent Application, EP 09174908.5, filed November 3, 2009, discloses side-light guides that have in one aspect a side-emitting light guide, or side-light guide, having a naked core of transparent polymeric material without a cladding. The side-light guide has a first surface defining a light emitting surface extending longitudinally along the side-light guide and a second surface having light-extraction elements extending longitudinally along the side-light guide and the second surface is arranged generally opposite to the first surface, the side-light guide has a generally circular cross -section comprising cut away regions at opposing sides defining on each opposite side at least one planar surface tapering inwardly from the first towards the second surface.

The term "cut away region" is intended to describe a region that is absent from what would otherwise be a complete circular cross -section. Hence, the term is not intended to mean that the actual region is cut away. While the region could be shaped by cutting away from a cylindrical side-light guide, the shape of the side-light guide including the shape of the cross-section with the cut away regions is typically obtained through molding as described further on. In one particular embodiment, the side-light guide has cut away regions at opposing sides defining on each opposite side a planar surface tapering inwardly substantially from the first to the second surface. The cross-section of such a side -light guide hence has a shape substantially resembling that of a pear. A side-light guide with a cross-sectional shape resembling that of a pear has been found to be particularly useful where the support of the light device comprises a housing enclosing the side-light guide and defining an opening for passage of light.

In addition to inwardly tapering planar surfaces on opposite sides of the side-light guide in the cut away regions, further planar surfaces can be provided as desired. For example, in one particular embodiment, the cut away regions at opposing sides defines on each opposite side a further planar surface tapering inwardly from the second surface to the first surface and connecting to the planar surface extending inwardly from the first towards the second surface thereby defining a generally V-shaped cut away region at each opposite side. The shape of a side-light guide with generally V-shaped cut away regions at each opposite side may be particularly useful where the support of the light ing device comprises a multiplicity of discrete points of physical engagement between a support and the side-light guide and whereby each of the points are linked or connected to one another along the length of the side-light guide. The points of physical engagement and shape of the cut away regions of the side-light guide can be designed to engage as male-female assuring a reliable retention of the side-light guide in the support.

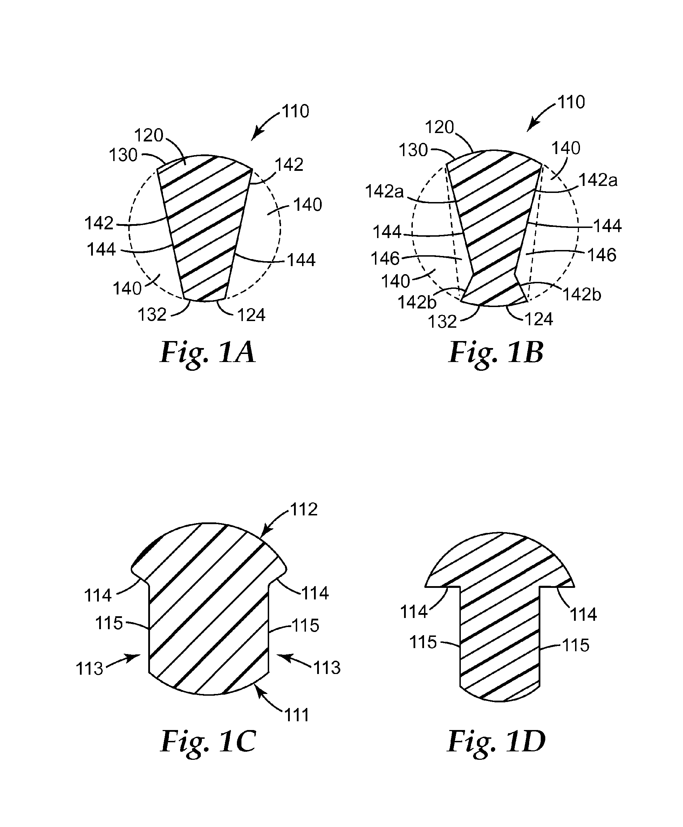

The first ends of the polymeric side-light guides can have contact edges. The contact edges can extend from the first ends of the polymeric side-light guides for a distance along the polymeric side-light guide. The contact edges of at least two of the plurality of polymeric side-light guides have contact edges that can be in physical and opt ical contact with one another. The contact edges of the plurality of polymeric side-light guides can fit together geometrically to form the first surface in shapes, for example, as wedges, rectangles, triangles, or any group of shapes so that the ends fit together substantially without gaps to form a first surface. An optical adhesive can be in contact with at least two of the contact edges of the plurality of polymeric side-light guides. Alternatively a mechanical connector can hold the ends and the contact surfaces of the plurality of polymeric side-light guides together to form the first surface. It is contemplated that both an optical adhesive and a mechanical connector can be employed together. Various cross-sectional shapes of typical lighting elements are illustrated, for example, in Figs. 1a-1d. Fig. 1a is a cross-sectional view of a first embodiment of the side-light guide 110. Side-light guide 110, which generally has a circular cross-section, comprises a core 120 formed of a polymeric material having a refractive index larger than that of air. Side-light guide 110 further comprises a first surface defining a light emitting surface 130 and a second surface 124 being arranged opposite thereto and having light extraction elements. Side-light guide 110 comprises cut away regions 140. Cut away regions 140 provide for sides 142 opposite to each other and each having a planar surface 144. Planar surfaces 144 are arranged with an angle with respect to each other and define a planar surface tapering inwardly from first surface 130 towards second surface 124. Such a shape helps to facilitate light bundling and concentration of the light emitted by light emitting surface 130 in that light beams which are being extracted by light extracting elements 1 32 will generally hit sides 142 under a more obtuse angle. Thereby, light beams will be reflected on the inside of sides 142 and will be directed towards light emitting surface 130 rather than being emitted at sides 142. Thus, light beams are being concent rated towards light emitting surface 130. Furthermore, planar surface 144 tapering inwardly helps to facilitate keeping side-light guide 110 in position within the support of the lighting device, for example within a housing or the like.

Fig. 1b shows a second embodiment of another side-light guide 110. The difference to the embodiment as shown in Fig. 1a is that cut away regions 140 define a generally v-shaped cut away region at opposite sides of side -light guide 110. The V-shaped cut away region is defined by planar surface 142a tapering inwardly from light emitting surface or first surface 130 to second surface 124 and second planar surface 142b tapering inwardly from second surface 124 to first surface 130 and intersecting with planar surface 142a.

Another embodiment of a side-light guide is illustrated in Fig. 1c wherein the generally-cylindrical side-light guide is cut away on opposed sides, as indicated at 113 in Fig. 1c, to form location features in the periphery of the guide between re gion 111 containing the notches and light-emitting region 112. Two cut-away regions 113 are identical and each forms two planar surfaces 114, 115 on the exterior of the modified side-light guide. Surfaces 114 extend inwardly from light-emitting region 112 of the side-light guide and, as described below, function as contact surfaces. Surfaces 115 extend, parallel to each other, from the inner edges of contact surfaces 114 to notch containing region 111 of the side-light guide and function as guiding surfaces.

Another embodiment of the cross-sectional shape of a side-light guide is shown in Fig. 1d. In this embodiment, the orientation of planar surfaces 114 are at right angles to respective guide surfaces 115 on the side-light guide.

Each of the plurality of side-light guides has a first end and a second end. In the provided lighting device, the first ends of the plurality of polymeric side-light guides fit together, substantially without gaps between the polymeric side-light guides, to form a first surface. The first surface can be planar and can be at right angles to the sides of the polymeric side-light guides and defines a cross-sectional area. The second ends of each of the plurality of polymeric side-light guides also form individual second surfaces. In the provided lighting device, the total cross-sectional area of the first surface of the plurality of polymeric side-light guides is substantially equal to or less than the cross-sectional area of the second end of any one of the polymeric side-light guides. This allows more equal distribution of light injected into the first surface of the plurality of polymeric side-light guides along the lengths of all of the individual polymeric side-light guides. The provided lighting device is configured to allow the light source to inject light into the plurality of polymeric side-light guides through the first surface.

Polymeric side-light guides are well known to those of ordinary skill in the art of, for example, automobile lighting. Suitable polymeric side-light guides can be molded from optically transparent materials, can be rigid or flexible, and can have light extracting elements such as, for example, notches along one side of the guide that can reflect light though the side of the side-light guide and thus, provide illumination along the length of the side-light guide.

When molding an illumination device, the material used to make the finished side-light guide can harden into a substantially optically transparent material. As a general class of hardenable materials, acrylates are preferred for their transparency properties. However, for many applications, a more flexible finished article is desired. In such cases, aliphatic urethanes may preferably be employed. Urethanes are also desirable because their contraction during hardening tends to be minimal, although the transparency properties of certain formulations may be less that desired.

When making an illumination device according to the provided lighting devices, typical hardenable polymeric materials include polyurethanes comprising the polymerization reaction product of one or more polyisocyanates with one or more polyols. Typically, polyurethanes useful in the present invention are thermoplastics and thermosets, and are substantially optically transparent and/or capable of transmitting visible light.

Typical polyurethanes comprise flexible or rigid, thermoplastic or thermoset aliphatic polyurethanes. Useful aliphatic polyurethanes can be formed from reactions of polyester polyols with polyisocyanates an d, optionally, chain extenders. The mole ratio of polyol: polyisocyanate: chain extender can be from about 1:1:0 to about 1:15:14. Typically, polyurethanes useful in the invention can exhibit excellent stability under prolonged exposure to light, particularly ultraviolet light. Typically, aliphatic polyurethanes useful in the invention can comprise:
a) soft segments comprising isocyanate-terminated polyester polyol molecules having molecular weights of about 200 to 15,000;
b) optionally, hard segments comprising predominantly the reaction product of a chain extender with the isocyanate end-groups of the soft segments and additional polyisocyanate; and
c) sufficient aliphatic polyisocyanate to react with essentially all of the polyester polyol and chain extender molecules present.

The incorporation of hard segments in the formulation is optional. Hard segments may improve the strength and may increasing the refractive index of the polyurethane waveguide, as needed, provided that they do not adversely affect the light transmissive properties of the waveguide of the invention.

In addition to the urethane linkage, optionally there may be various amounts of other linkages such as isocyanurates, biurets, allophonates, amides, or oxazolidones present in the waveguide. In these instances, additional polyisocyanate beyond the amount previously described can be required, but the additional linkages cannot be present to such an extent that they would cause phase separation resulting in light scattering, thereby reducing the effectiveness of the waveguide. In addition, plasticizers such as dibutyl adipate, catalysts such as dibutyltin dilaurate, and other additives such as stabilizers and antioxidants may be added in amounts necessary to assure satisfactory product performance. Aliphatic polyurethanes can be blended with other optically clear polymers, provided that the blend is compatible, or that the domains formed are small and do not scatter light which would reduce the effectiveness of the resulting wave guide.

Typical polyols include glycols predominantly derivable from branched C₃-C₆ alkylene oxides, although some units derived from ethylene oxide may be included, providing the essential effect of branched units on the character of the pre -and final polymers is retained and phase crystallization does not occur. The amount of ethylene oxide units is preferably less than about 20 weight percent of the total amount of alkylene oxide units. More preferred are glycols predominantly derivable from propylene oxide and/or butylene oxide, including, for example, poly(oxypropyleneoxyethylene) glycol, (commercially available under the trade designation VORANO 5287 and sold by Dow Chemical Company, Midland, MI) with a molecular weight of about 2000, and poly(oxybut yleneoxyethylene) glycol.

Additional higher molecular weight polyols include the polyethylene and polypropylene oxide polymers in the molecular weight range of from about 200 to about 20,000 such as the series of poly(ethylene oxide) compounds available f rom Union Carbide Corp., Danbury, CT and sold under the trade designations CARBOWA 400, 600, 800, 1000, 3350, 8000 and 20000; the polyether polyols available from Hercules Chemical Specialties Co., Wilmington, DE under the trade designation STRUCTON HPOR 0100 NCB; and poly(tetramethylene ether) glycols in the molecular weight range of from about 200 to about 4000, such as the series of polyols available from DuPont Co., Wilmington, DE and sold under the trade designations TERETHANE 1000 and 2000.

Polyols that are particularly useful in preparing optical elements for the provided lighting devices include polyester polyols. Examples of useful polyester polyols include polycaprolactone polyols in the molecular weight range of from about 200 to about 5000, such as the series of polyols sold under the trade designations TONE 200, 210, 230, 240, 260, 301, 305, and 310 as available from Union Carbide; hydroxy -terminated polybutadiene materials, such as the series of polyols sold under the POLY BD trade designation as available from Elf Atochem, Philadelphia, PA; hydrogenated polybutadiene polyols, such as those sold under the trade designations POLYTAIL H and POLYTAIL HA by Mitsubishi Gas Chemical America Inc., New York, NY; aliphatic block co-polymer polyols, such as poly(ethylene-butylene) diols as sold by Shell Chemical Co., Houston, TX under the trade designation KRATON HPVM 2201; polyglycol esters of dibasic acids such as adipic acid, azeleic acid, sebacic acid and the like, such as the family sold under the DESMOPHEN trade designation by Bayer, Pittsburgh, PA, as DESMOPHEN 670-80, 670-100, 800, and 1100, and the family sold under the trade designation CAPA, available from Pertorp, Houston, TX, as CAPA 200 and 301; polyethylene terephthalate polyols, such as that sold by Cook Chemical Co., San Clemente, CA under the trade designation CHARDANOL; acrylic polyols, such as the series sold by S.C. Johnson & Sons, Inc., Racine, WI under the JONCRYL trade designation; carboxy-functional polyester polyols, such as those sold by Inolex Chemical Co., Philadelphia, PA under the trade designation LEXOREX 1405; polycarbonate polyols, such as sold under the trade designation PERMANO by Permuthane Coatings Div., Stahl USA, Peabody, MA; and random copolymers of poly(tetramethyl ene oxide)/polycarbonate, such as the series of polyols available from BASF Corporation, Mount Olive, NJ and sold under the trade designation POLYTHF CD.

Useful diisocyanates are free of aromatic moieties and comprise only aliphatic and/or cycloaliphatic moieties. Typical diisocyanates include polymethylene diisocyanates such as 1,6-hexamethylene diisocyanate and 1,12 -dodecane diisocyanate, methylene bis(4-isocyanatocyclohexane), 1,3- and 1,4-bis(isocyanatomethyl)cyclohexane, cyclohexane-1,4-diisocyanate, cyclohexane-1,3-diisocyanate, 2,2,4-trimethylhexamethylene diisocyanate, cyclobutane-1,3-diisocyanate, isophorone diisocyanate (1-isocyanato-3,3,5-trimethyl-5-isocyanato)cyclohexane, IPDI), 2,4- and 2,6-hexahydrotolylene diisocyanate, perhydo-2,4'-and -4,4'-diphenylmethane diisocyanate (H ₁₂MDI, available under the trade designation DESMODUR W from Bayer Corp., Pittsburgh, PA), polyisocyanates containing isocyanurate groups, such as the isocyanurate of 1,6 -hexamethylene diisocyanate (trade designation DESMODUR N-3300, N-3600, and N-3800 available from Bayer Corp.), hexahydro-1,3- and -1,4-phenylene diisocyanate, mixtures of 2,2,4- and 2,4,4-trimethyl hexamethylene diisocyanate (TMDI), di(isocyanatoethyl)carbonate, lysine diisocyanate, 1,6-diisocyanato-2,2,4,4-tetramethyl hexane, 1,8-diisocyanato-*p*-menthane, and isopropylidine bis(4-isocyanatocyclohexane), including mixtures of isomers of the above diisocyanates, oligomers of the above diisocyanates, and any combinations of the above diisocyanates and oligom ers thereof.

Chain extenders can include aliphatic C₂-C₄ straight chain and branched chain diols, diamines, and hydroxy amines; hydrazine and piperazine, cyclo- and cycloaliphatic diols, diamines or hydroxy amines having up to 12 carbon atoms, hydroquinone and resorcinol (as such or as the bis(2-hydroxyethyl)ethers), and aromatic and heteroaromatic nuclei (and their fully-hydrogenated counterparts) substituted with two groups that are methylol and/or aminomethyl. Other chain extenders include aliphatic C₂-C₄ straight and branched chain diols and cycloalkyl diols, such as ethylene glycol, 1,2- and 1,3-propylene glycol, 1,4- and 2,3-butylene glycol, 1,5-pentanediol, 1,6-hexanediol, 1,8-octanediol, neopentyl glycol, 1,4-cyclohexane dimethanol, 1,4-cyclohexanediol, trimethylolpropane, 1,4-bis(hydroxymethyl cyclohexane), 2-methyl-1,3-propanediol, glycerol, trimethylolpropane, 1,2,6-hexanetriol, trimethylolethane, pentaerythritol, quinitol, mannitol, sorbitol, diethylene glycol, triethylene glycol, tetraethylene glycol, higher polyethylene glycols, dipropylene glycol, higher polypropylene glycols, dibutylene glycol, higher polybutylene glycols, 4,4'-dihydroxy diphenyl propane and dihydroxy methyl hydroquinone. Other suitable types of chain extenders include fluorine-substituted difunctional diols such as 1,2,2,3,4,4-hexafluoropentane-1,5-diol and phenyl-substituted C₂-C₅ diols such as 2-phenyl-1,3-propylene glycol and phenyl-1,4-butylene glycol. Of course, mixtures and combinations of the above diols can be used as chain extenders.

The mole ratio of polyol: polyisocyanate: chain extender is preferably in the range of from about 1:1:0 to about 1:15:14, more preferably from about 1:1:0 to about 1:6:5. Aliphatic polyurethanes useful in the invention can be prepared b y first reacting the polyol and diisocyanate to form a prepolymer which can be an oligomer, then reacting the prepolymer or oligomers with the chain extender, in a two-step process. The polyurethane may also be prepared by first blending the polyol and ch ain extender followed by addition of diisocyanate, in a one-pot method. The polyurethane can be a thermoplastic material having a weight-average molecular weight preferably in the range of from about 60,000 to about 200,000 or it can be a thermoset materi al, *i.e.,* crosslinked. Other materials useful for the provided lighting devices include thermoplastic materials such as poly(methyl methacrylate) or polycarbonate.

The contact edges of at least two of the plurality of polymeric side-light guides for the provided lighting device can physically engage an optical adhesive. The optical adhesive can be any optical adhesive that can bond to and transmit light through the contact edges of the polymeric side-light guides. Typically, optical adhesives have an index of refraction that is very close to or substantially the same as the polymeric side-light guides to minimize reflection at the interfaces of the polymeric side-light guides and the adhesive. Optimally, the plurality of polymeric side-light guides and the optical adhesive all comprise the same polymeric material. Useful optical adhesive include, for example, EC-5 Rite-Lok Cyanoacrylate or UV-50 Rite-Lok (both, available from 3M, St. Paul, MN). Typically, the polymeric side-light guides are made from an optically transparent polyurethane and the optical adhesive can be made from the precursors of the same transparent polyurethane that can then be allowed to cure when in contact with the contact edges of the at least two polymeric side-light guides made of the same polyurethane.

In another embodiment, the provided lighting devices include a mechanical connector that has an elongate opening. The mechanical connector can be made of any material and can be shaped to hold the plurality of first ends of the lighting devices together so that they are in optical contact with each other. There is, typically, physical engagement between the mechanical connector and the first ends of the plurality of polymeric side-light guides. When physically engaged in the mech anical connector, the contact edges of at least two of the plurality of side-light guides are in optical contact with each other. The mechanical connector can also engage a lighting device, such as a laser diode, so as to maintain alignment of the lighting source with the first surface of the plurality of polymeric side-light guides. An optical adhesive, as described above, can be used between the contact edges.

The first ends of the plurality of polymeric side-light guides can have at least one location feature. The location feature can be derived from a cut away region of the first ends of the plurality of polymeric side-light guides. The cut away region can be removed to produce the location feature. The location feature can be at the first ends of the plurality of polymeric side-light guides so that it can be engaged in the elongate opening of the mechanical connector. In some embodiments, the mechanical connector also has a location feature that allows the mechanical connector to hold the first ends of the plurality of polymeric side-light guides in position in a lock and key type of engagement. Some embodiments of location features are shown, for example, in Figs. 1a-1d. In some embodiments of the provided lighting device, the plurality of first ends of each polymeric side-light guide and the elongate opening of the mechanical connector can include an optical adhesive as described above.

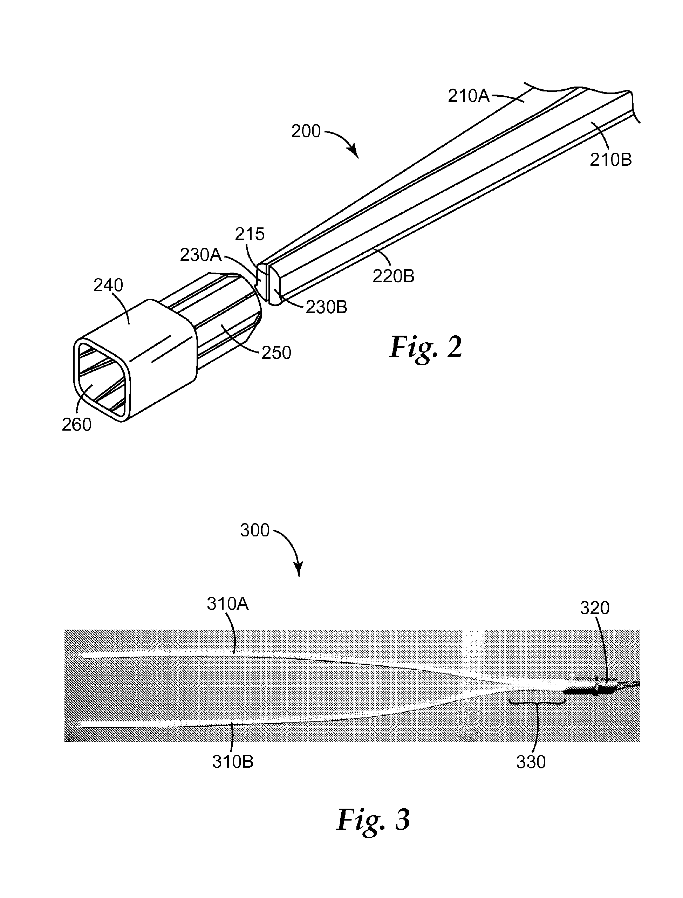

Fig. 2 is a schematic drawing of the joining of two polymeric side-light guides with a mechanical connector. Lighting device 200 includes two polymeric side-light guides 210A and 210B that have contact edges which are in optical contact in region 215. Polymeric side-light guides 210A and 210B have location features (location feature 220B for polymeric side-light guide 210B only is shown) that can fit into elongate opening 250 of mechanical connector 240. When polymeric side-light guides 210A and 210B are engaged into elongate opening 250 of mechanical connector 240, contact edges of each polymeric side-light guide are held in optical contact. A light source can be engaged in opening 260 of mechanical connector 240 opposite elongate opening 250 to align the light source for efficient light injection.

Fig. 3 is a photograph of provided lighting device 300. Lighting device 300 includes laser diode 320 and two polymeric side-light guides 310A and 310B that have extractors and allow light to be emitted along their lengths as shown in the photograph. Polymeric side-light guides 310A and 310B have contact edges that are in optical contact with each other in region 330 allowing for more equal distribution of light between the fibers and along their length.

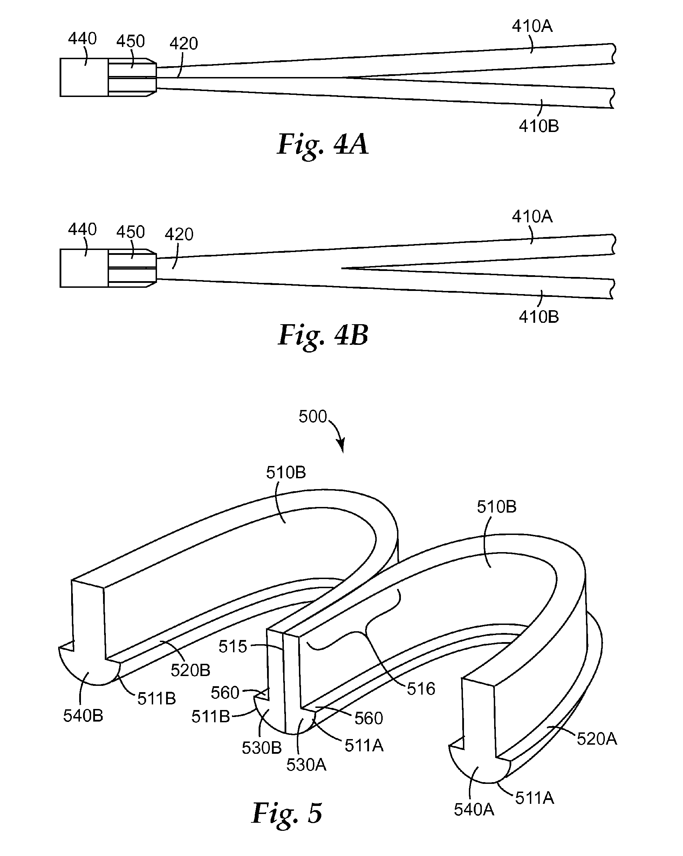

Figs. 4a and 4b depict a provided lighting device that includes mechanical connector 440 having elongate opening 450 into which two side-light guides 410a and 410b are engaged. In the embodiment shown in Fig. 4a gap 420 is shown between side-light guide 410a and 410b at the end that is engaging mechanical connector 440. In the embodiment shown in Fig. 4b, the two polymeric side-light guides 410a and 410b fit together substantially without a gap at 420.

Fig. 5 displays is a schematic drawing of an embodiment of two joined polymeric side-light guides useful in the provided devices, kits, and methods. In this embodiment, two polymeric side-light guides 510A and 510B are shown. First polymeric side-light guide 510A has first end 530A and second end 540A. Second end 540A is "mushroom" shaped having a cross-sectional shape identical to that shown in Fig. 1d. The mushroom shape allows for a surface 511A that has notches or light-extracting elements and location element 520A. Typically, the notches can be in the surface opposite the mushroom head, although it may technically be possible to arrange the notches in the wider mushroom head surface. First polymeric side-light guide 510A has first end 530A shaped as "half of a mushroom" that can be joined with first end 530B from second side-light guide 510B also shaped as "half of a mushroom" along contact edge 515 to form a first surface that has a "mushroom shape" and has a cross-sectional area that is substantially equal to or less than that of either second surface (cross-section of second end 530A) of polymeric side-light guide 510A or second surface (cross-section of second end 530B) of second polymeric side-light guide 510B. Both polymeric side-light guides are joined along their respective first ends so that contact edges of each end are in optical contact along region 516 of the first ends. Each polymeric side-light guide 510A and 510B have location feature 520A and 5 that extend along the side-light guides on the inside of the guides but do not extend in contact zone 516. First surface (cross-section of ends 530A and 530B combined), thus, has location feature 560 that can engage in a mechanical connector (not shown).

In another embodiment, a kit is provided for assembling a provided lighting device. The kit includes a light source, a plurality of polymeric side-light guides, a mechanical connector, and, optionally, an optically clear adhesive. The first end of the plurality of polymeric side-light guides can be inserted into the mechanical connector through an elongate opening to form the lighting device.

Finally, a method for assembling a provided lighting device is provided that includes providing a light source, a mechanical connector that has an elongate opening, and a plurality of polymeric side-light guides each having sides, a first end, and a second end as described for the device above. The first ends of the plurality of polymeric side-light guides can be assembled so that they fit together substantially without gaps between the polymeric side-light guides to form a first surface. The first surface is the surface through which light from a light source can be injected. It can be a continuous surface of any shape such as, for example, a rectangle or ellipse, or it can be discontinuous as, for example, two circular surfaces substantially adjacent to one another. An optical adhesive can be present between the two surfaces or covering the two surfaces. The first ends of the plurality of polymeric side-light guides can be inserted into the elongate opening of the mechanical connector. The cross-sectional area of the first surface of the plurality of polymeric side-light guides is substantially equal to or less than the cross-sectional area of any of the surfaces of any one of the polymeric side-light guides. The light source is configured to inject light into the plurality of polymeric side-light guides through the first surface. Optionally, an optical adhesive can be applied to the first surface of the plurality of side-light guides. The optical adhesive can also be applied along contact edges of at least two of the plurality of side-light guides.

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows. All references cited in this disclosure are herein incorporated by reference in their entirety.

## Claims

1. A lighting device comprising:
a plurality of polymeric side-light guides each having sides, a first end, and a second end, and a side contact edge,
wherein each end has a surface that defines a cross-sectional area,
wherein the first ends of the plurality of polymeric side-light guides come together to form a first surface,
wherein the total cross-sectional area of the first surface of the plurality of polymeric side-light guides is substantially equal to or less than the cross-sectional area of any of the surfaces of the second end of any one of the polymeric side-light guides.

2. A lighting device according to claim 1, wherein the side contact edges of at least two of the plurality of polymeric side-light guides are in optical contact with one another.

3. A lighting device according to claim 2, wherein the contact edges of at least two of the plurality of polymeric side-light guides are in contact with an optical adhesive.

4. A lighting device according to any of claims 1 to 3 , further comprising a mechanical connector that holds the ends of the polymeric side-light guides together.

5. A lighting device according to any of the previous claims, wherein at least one of the plurality of polymeric side-light guides comprises light extracting elements on the side of the polymeric side-light guide.

6. A lighting device according to any of the previous claims, further comprising a mechanical connector comprising an elongate opening,
wherein there is physical engagement between the mechanical connector and the surface formed by the ends of the plurality of polymeric side-light guides.

7. A lighting device according to claim 6, wherein the elongate opening of the mechanical connector and the first ends of the plurality of polymeric side-light guides comprise at least one location feature.

8. A lighting device according to claim 7, wherein at least one location feature on the first ends of the plurality of polymeric side-light guides is engaged in the location feature in the elongate opening of the mechanical connector.

9. A lighting device according to any of claims 1 to 8 , further comprising a light source, wherein the light source is configured to inject light into the plurality of polymeric side-light guides through the first surface.

10. A vehicle comprising a lighting device according to any of the above claims.

11. A kit for assembling a lighting device according to claim 4, the kit comprising the plurality of polymeric side-light guides, the mechanical connector, and optionally, an optically clear adhesive, wherein the first end of the plurality of polymeric side-light guides can be inserted into the mechanical connector through the elongate opening to form the lighting device.

12. A kit according to claims 11, further comprising a light source.

13. A method of assembling a lighting device comprising:
a mechanical connector comprising an elongate opening, and a plurality of polymeric side-light guides each having sides, a first end, and a second end, each end having a surface that defines a cross-sectional area;
assembling the first ends of the plurality of polymeric side-light guides so that they fit together to form a first surface; and
inserting the first ends of the plurality of polymeric side-light guides into the elongate opening of the mechanical connector,
wherein the total cross-sectional area of the first surface of the plurality of polymeric side-light guides is substantially equal to or less than the cross-sectional area of any of the surfaces of any one of the polymeric side-light guides.
